# FASCICULE DE BREVET EUROPEEN

(11) **EP 4 127 692 B1**
(45) Date de publication et mention de la délivrance du brevet: **11.06.2025**
(21) Numéro de dépôt: 21721153.1
(22) Date de dépôt: 31.03.2021
(51) Int. Cl.: G01N 29/04, G01N 29/38, G01N 29/44, G01N 29/46

(54) **CONTRÔLE NON DESTRUCTIF D'UNE PIÈCE MÉCANIQUE EN UN MATÉRIAU POLYCRISTALLIN**
ZERSTÖRUNGSFREIE PRÜFUNG EINES MECHANISCHEN TEILS AUS EINEM POLYKRISTALLINEN MATERIAL
NON-DESTRUCTIVE TESTING OF A MECHANICAL PART MADE OF A POLYCRYSTALLINE MATERIAL

(30) Priorité: 02.04.2020 FR 2003292
(43) Date de publication de la demande: 08.02.2023
(73) Titulaire: SAFRAN, 75015 Paris (FR); CENTRE NATIONAL DE LA RECHERCHE SCIENTIFIQUE, 75794 Paris Cedex 16 (FR); École Supérieure de Physique et de Chimie Industrielles de la Ville de Paris (ESPCI), 75005 Paris (FR)
(72) Inventeur: BRUTT, Cécile, 77550 MOISSY-CRAMAYEL (FR); GERARDIN, Benoit, 77550 MOISSY-CRAMAYEL (FR); AUBRY, Alexandre, 75794 PARIS CEDEX 16 (FR); DERODE, Arnaud, 75794 PARIS CEDEX 16 (FR); PRADA, Claire, 75794 PARIS CEDEX 16 (FR)
(74) Mandataire: Brevalex
(86) Numéro de dépôt international: PCT/FR2021/050563
(87) Numéro de publication internationale: WO 2021/198614

(56) Documents cités:
- EP-A1- 2 182 351
- WO-A1-2010/142927
- DECLERCQ N F ET AL: "Simulations of harmonic and pulsed ultrasonic polar scans", NDT & E INTERNATIONAL, BUTTERWORTH-HEINEMANN, OXFORD, GB, vol. 39, no. 3, 1 April 2006 (2006-04-01), pages 205 - 216, XP027969093, ISSN: 0963-8695, [retrieved on 20060401]

## Description

### Domaine technique

La présente invention concerne le contrôle non destructif de pièces mécaniques constituées en matériau polycristallin.

### État de l'art antérieur

Un certain nombre de pièces critiques utilisées dans des réacteurs de d'aéronefs sont réalisées en alliages de titane. Ces pièces sont forgées à partir de cylindres appelés « billettes ». Elles sont éventuellement pré-usinées ou usinées.

Le titane, comme certains alliages, est un matériau polycristallin, c'est-à-dire qu'il est constitué de grains susceptibles de se déformer lors des différentes étapes de forgeage qu'il subit. La mise en forme de la pièce provoque des déformations de sa macrostructure et d'éventuels défauts présents dans la pièce.

Un plan de fibrage correspond à la carte des déformations subies par la pièce lors de sa mise en forme. La déformation des grains en tout point de la pièce peut être prévue numériquement par des logiciels, mais les résultats ne sont pas totalement fiables. Parfois, le fibrage réel des pièces ne correspond pas au fibrage théorique, par exemple en raison d'erreurs lors de la fabrication de la billette ou de dérives lors du forgeage de la pièce.

Afin d'assurer l'intégrité de ces pièces avant montage dans le réacteur et vérifier qu'elles ne présentent pas de défaut tel que fissure, porosité ou inclusion, ces pièces sont contrôlées de manière non-destructive par ultrasons afin de détecter d'éventuelles indications de défauts. Ces contrôles sont effectués sur les billettes et sur les pièces formées après forgeage. Ils sont effectués à l'aide d'un ou plusieurs transducteurs piézo-électriques. Il est connu d'utiliser une sonde piézo-électrique mono-élément ou une sonde multi-éléments (annulaire ou linéaire).

Les contrôles par ultrasons d'une pièce sont conçus en supposant connue le plan de fibrage de la pièce en question.

Il est connu que la détection de défaut est optimale lorsque l'onde ultrasonore incidente se propage selon une direction perpendiculaire au fibrage, c'est-à-dire perpendiculairement à la direction privilégiée d'élongation des grains qui constituent le matériau polycristallin de la pièce. Les directions de tirs acoustiques sont donc déterminées à partir du plan de fibrage supposé : il s'agit d'un élément important entrant en ligne de compte pour la conception du plan de contrôle. La détermination du fibrage de la pièce est ainsi essentielle pour assurer une fiabilité et une sécurité optimales.

Or comme on l'a vu, il est possible que le fibrage réel des pièces ne corresponde pas au fibrage théorique utilisé pour la conception du contrôle. Ceci est un problème car le contrôle effectué n'est pas adapté à la pièce, ce qui peut nuire à la détection d'un défaut dans le cas le plus extrême.

Par ailleurs, la connaissance du fibrage est également porteuse d'enseignements sur la tenue mécanique de la pièce.

WO 2018/138430 présente un contrôle ultrasonore d'une pièce pour déterminer une direction d'allongement d'une microstructure allongée se situant dans une pièce. Pour cela, un transducteur linéaire est déplacé en translation et en rotation par des moyens de déplacement comprenant par exemple un bras robotique ou un support mobile. Un traitement mathématique dans l'espace réel est réalisé sur les résultats de mesure.

US 6 387 197 concerne un procédé de traitement du titane pour former des articles en titane qui présentent un bruit ultrasonore généré réduit pendant l'inspection par ultrasons.

Les matériaux à gros grains sont souvent difficiles à évaluer par ultrasons. Les difficultés surviennent parce que les ondes sonores, qui sont utilisées pour l'inspection par ultrasons peuvent être partiellement réfléchies par les grains et représentent un "bruit de structure", ou bruit de grain. Le bruit de structure généré peut masquer les défauts du matériau et n'est donc pas souhaitable.

US 5 471 878 concerne un procédé pour supprimer le bruit de grain lors de l'inspection par ultrasons d'un objet, et pour permettre ainsi une forte probabilité de détection de défaut et une faible probabilité de fausses indications de défaut.

WO 2010/142927 divulgue un procédé et un dispositif ultrasonores pour caractériser un milieu. Il s'agit en particulier de détecter de manière non-destructive l'état d'une pièce mécanique, par exemple un os humain ou animal. Ce dispositif utilise une sonde monodimensionnelle dont les transducteurs ne sont pas capables d'émettre et de recevoir des signaux selon différents angles d'excitation. Des « trajectoires », définies comme des lignes de forte énergie qui reflètent chacune un mode vibratoire et qui forment un ensemble caractéristique du milieu de propagation, sont déterminées. Elles correspondent aux maxima d'énergie dans le repère fréquence-vitesse de propagation. Ces trajectoires n'ont donc rien à voir avec une orientation tridimensionnelle du fibrage de la pièce mécanique.

Il n'existe pas de méthode non-destructive industrielle efficace pour déterminer l'orientation du fibrage des pièces en matériaux polycristallins.

### Exposé de l'invention

L'invention vise à résoudre les problèmes de la technique antérieure en fournissant un dispositif de contrôle non destructif d'une pièce mécanique en un matériau polycristallin, comportant
- une sonde ultrasonore comportant un réseau bidimensionnel de transducteurs capables d'émettre et de recevoir des signaux selon différents angles d'excitation, et
- un module de traitement adapté pour contrôler les transducteurs en émission et en réception, traiter les signaux reçus par les transducteurs de manière à exprimer les signaux reçus par les transducteurs dans deux plans d'ondes planes construits à partir de vecteurs d'ondes d'émission et de réception de la sonde, et en déduire une information représentative de l'orientation tridimensionnelle du fibrage de la pièce mécanique.

Grâce à l'invention, il est possible de tirer des faisceaux ultrasonores avec des angles différents sans rotation de la sonde. Ainsi, en une seule acquisition et sans intervention de l'utilisateur, il est possible d'acquérir un ensemble de signaux ultrasonores suffisant pour le traitement approprié. Ensuite, le traitement permet de construire des vecteurs d'ondes virtuels permettant de déduire une information sur l'orientation locale et tridimensionnelle du fibrage.

L'invention permet d'obtenir une plus grande robustesse de la mesure tout en étant compatible avec les systèmes industriels.

Selon une caractéristique préférée, le module de traitement est adapté pour construire une matrice de réflexion à trois dimensions.

Selon une caractéristique préférée, le module de traitement est adapté pour exprimer les signaux reçus par les transducteurs dans une base d'ondes planes.

Selon une caractéristique préférée, le module de traitement est adapté pour construire les deux plans d'ondes planes par sommation et différence des vecteurs d'ondes associés respectivement aux ondes planes émises et reçues par la sonde.

Selon une caractéristique préférée, le module de traitement est adapté pour déduire l'information représentative de l'orientation tridimensionnelle du fibrage de la pièce mécanique en déterminant une direction associée à des maxima d'intensité des signaux reçus exprimés dans les deux plans d'ondes planes construits à partir des vecteurs d'ondes d'émission et de réception de la sonde.

L'invention concerne aussi un procédé de contrôle non destructif d'une pièce mécanique en un matériau polycristallin, mis en œuvre dans le dispositif précédemment présenté, caractérisé en ce qu'il comporte des étapes de contrôle des transducteurs en émission et en réception, de traitement des signaux reçus par les transducteurs, d'expression des signaux reçus par les transducteurs dans deux plans d'ondes planes construits à partir de vecteurs d'ondes d'émission et de réception de la sonde, et de déduction d'une information représentative de l'orientation tridimensionnelle du fibrage de la pièce mécanique.

Le procédé présente des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### Brève description des dessins

D'autres caractéristiques et avantages apparaîtront à la lecture de la description suivante d'un mode de réalisation préféré, donné à titre d'exemple non limitatif, décrit en référence aux figures dans lesquelles :
[Fig. 1] illustre le dispositif de contrôle non destructif en cours de contrôle de la pièce mécanique, selon un mode de réalisation de l'invention,
[Fig. 2] illustre une vue de dessous de la sonde ultrasonore mise en œuvre dans le dispositif de la figure 1, selon un mode de réalisation de l'invention,
[Fig. 3] illustre le procédé de contrôle non destructif de la pièce mécanique, selon un mode de réalisation de l'invention,
[Fig. 4] est une représentation schématique des vecteurs d'ondes associées aux ondes planes émises et reçues par la sonde ultrasonore, selon un mode de réalisation de l'invention.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

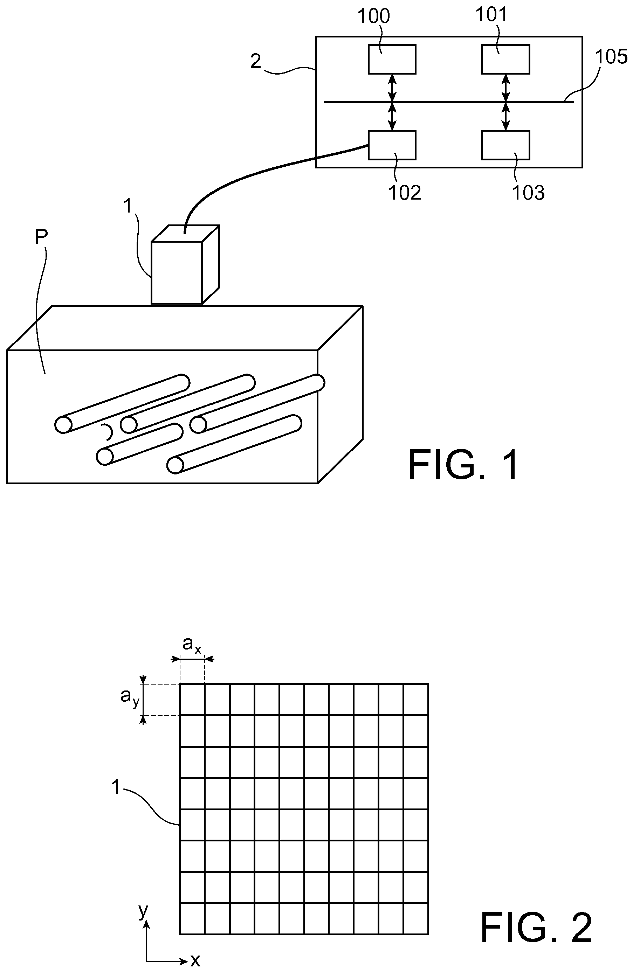

A la **figure 1** est représentée une pièce mécanique P en matériau polycristallin, par exemple du titane. La pièce P est forgée et éventuellement pré-usinée et/ou usinée. La pièce P comporte un fibrage interne, schématisé par des cylindres.

La pièce P doit être contrôlée de manière non-destructive pour vérifier qu'elle ne présente pas de défaut, tel que par exemple fissure, porosité ou inclusion. Ce contrôle peut être réalisé grâce aux techniques ultrasonores. Pour cela, l'utilisateur a besoin de connaître la direction du fibrage de la pièce, c'est-à-dire la direction locale préférentielle d'élongation des grains du matériau. En effet, il est connu que la détection de défaut est optimale lorsque l'onde ultrasonore incidente se propage selon une direction perpendiculaire au fibrage.

Le dispositif de contrôle non destructif qui va être décrit permet de déterminer direction du fibrage de la pièce P.

Selon un mode de réalisation préféré représenté à la **figure 1****,** le dispositif de contrôle non destructif d'une pièce mécanique en un matériau polycristallin comporte une sonde ultrasonore 1 qui comporte un réseau bidimensionnel de transducteurs capables d'émettre et de recevoir des signaux selon différents angles de propagation.

La **figure 2** représente une vue de dessous de la sonde ultrasonore 1. Les transducteurs sont rectangulaires, de tailles aₓ et a_{y} selon deux dimensions définies par deux axes orthogonaux X et Y et sont répartis suivant les axes X et Y. Les transducteurs sont indépendants les uns des autres et sont contrôlable en émission et en réception. Il est à noter que d'autres géométries de transducteurs sont possibles et que leur disposition peut être régulière ou aléatoire.

Le dispositif de contrôle non destructif comporte aussi un module de traitement 2 relié à la sonde ultrasonore 1. Le module de traitement 2 est adapté pour contrôler les transducteurs en émission et en réception et pour traiter les signaux reçus par les transducteurs comme décrit dans la suite.

Le module de traitement 2 est implémenté sous la forme d'un ordinateur.

L'ordinateur 5 comporte notamment un processeur 100, une mémoire 101, une interface d'entrée 102 et une interface de sortie 103.

Ces différents éléments sont classiquement reliés par un bus 105.

Le processeur 100 exécute un programme d'ordinateur mettant en œuvre le procédé selon l'invention. Ces traitements sont réalisés sous la forme d'instructions de code du programme d'ordinateur qui sont mémorisées par la mémoire 101 avant d'être exécutées par le processeur 100.

L'interface de sortie 103 est reliée à la sonde 1 et délivre les données qui représentent des instructions de commandes des transducteurs de la sonde 1.

L'interface d'entrée 102 est reliée à la sonde 1 et est destinée à recevoir les données représentant les signaux reçus par les transducteurs.

Deux configurations de contrôle de la pièce sont possibles :
- dans la première, la sonde est positionnée directement sur la pièce à inspecter (configuration dite « au contact »), la transmission ultrasonore étant alors assurée par un gel couplant ou de l'eau ;
- dans la seconde, la pièce inspectée et la sonde sont immergée dans de l'eau, la sonde est positionnée face à la pièce, la bonne transmission ultrasonore étant alors assurée par l'eau.

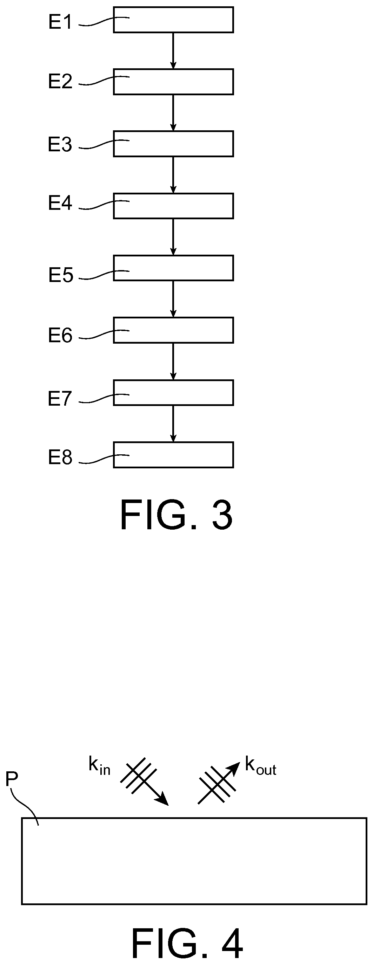

Le procédé de contrôle non destructif de la **figure 3** représente un mode de réalisation du fonctionnement du dispositif de contrôle non destructif de la figure 1. Le procédé comporte des étapes E1 à E8.

On suppose que la pièce P a été disposée de manière à être contrôlée.

L'étape E1 est une commande d'émission de signal ultrasonore par la sonde 1. Pour cela, tout ou partie de la sonde est utilisée afin d'émettre une série de signaux dans l'espace réel lié au plan de la sonde. L'émission est par exemple effectuée transducteur par transducteur. Chaque tir élémentaire d'un transducteur émet une onde circulaire. Il faut l'ensemble des tirs élémentaires, c'est-à-dire un par transducteur, pour acquérir une matrice dite « dans l'espace réel ».

L'émission de signal ultrasonore peut aussi être effectuée dans d'autres espaces si le rapport signal sur bruit est insuffisant, par exemple une série d'ondes planes de vecteurs d'ondes kᵢₙ définis, destinés à sonder différents angles. Dans ce cas, tous les transducteurs étant utilisés, l'énergie totale rayonnée est donc supérieure.

Un tir d'ondes planes met à contribution tous les transducteurs et envoie une onde plane selon un angle précis et défini. Il faudra un ensemble de séquences de tirs correspondant à chacun des angles d'une matrice de réflexion pour acquérir cette dernière, directement dans l'espace des ondes planes.

L'étape suivante E2 est la réception de signal ultrasonore par la sonde 1.

Comme pour l'émission, différentes possibilités existent en réception. Une première possibilité est d'appliquer des lois de retards aux signaux ultrasonores reçus afin de les exprimer dans une base d'ondes planes. Dans ce cas, la réception des signaux ultrasonores est effectuée dans une base d'ondes planes.

Une autre possibilité est d'effectuer la réception dans l'espace réel. Dans ce cas, comme exposé dans la suite, une double transformée de Fourier spatiale sera appliquée aux signaux ultrasonores reçus afin d'effectuer un changement de base pour se ramener dans une base d'ondes planes.

A l'étape suivante E3, l'ensemble des signaux reçus par la sonde 1 sont réarrangés en une matrice de réflexion K afin de pouvoir effectuer un traitement de signal avancé sur ces signaux.

L'étape E3 est la construction de la matrice de réflexion K, comportant les signaux reçus par la sonde 1, exprimés dans une base parmi les suivantes :
a. Base canonique ou base élémentaire : les éléments de la sonde tirent ou reçoivent le signal rétrodiffusé un par un, de manière indépendante.
b. Base d'ondes planes : les éléments de la sonde tirent ou reçoivent le signal rétrodiffusé avec un certain délai afin de créer une onde plane de direction de propagation choisie kᵢₙ.
c. Une combinaison de ces deux bases en émission et en réception.

La matrice de réflexion K est composée de 3 dimensions : la base choisie en émission, la base choisie en réception et le temps.

La base choisie en émission est la base canonique uᵢₙ ou la base d'ondes planes kᵢₙ. La base choisie en réception est la base canonique uₒᵤₜ ou la base d'ondes planes kₒᵤₜ.

La sonde 1 étant matricielle (2D), chaque dimension uᵢₙ, uₒᵤₜ, kᵢₙ, kₒᵤₜ est un vecteur de deux composantes d'indices x et y.

La **figure 4** illustre les vecteurs d'ondes kᵢₙ et kₒᵤₜ associés respectivement aux ondes planes émises et reçues par la sonde 1.

L'étape suivante E4 est l'application d'une transformée de Fourier temporelle à chacun des signaux élémentaires acquis, afin de les exprimer dans l'espace des fréquences selon la dernière dimension de la matrice de réflexion K. On rappelle que la matrice de réflexion K comporte deux dimensions spatiales et une dimension temporelle.

Le résultat de l'étape E4 est une matrice de réflexion Kf, dont la troisième dimension est fréquentielle.

Il est possible de se placer à une seule fréquence, la fréquence nominale des transducteurs par exemple. Cela permet de limiter le temps de calcul.

Il est aussi possible de considérer une bande passante, par exemple la bande passante des transducteurs, puis de moyenner le signal sur la bande passante considérée afin d'améliorer le rapport signal / bruit.

Dans tous les cas, le calcul est réalisé fréquence par fréquence.

L'étape suivante E5 est la détermination si l'émission ou la réception de signal ultrasonore a été réalisée dans la base canonique ou si l'émission et la réception de signal ultrasonore ont été réalisées dans la base canonique. Lorsque c'est le cas, une transformée de Fourier spatiale est appliquée aux signaux reçus, sur la ou les dimension(s) concernée(s) de la matrice de réflexion afin d'exprimer les signaux reçus dans une base d'ondes planes.

La matrice de passage de la base canonique à la base d'ondes planes est la suivante : P(u,k)=exp(±i k.u), le signe dépendant de la convention choisie pour la transformée de Fourier, u représentant la base canonique, k représentant la base d'onde planes et « . » représentant le produit scalaire.

Si l'émission et la réception ont été réalisées dans une base d'ondes planes, la matrice de réflexion est inchangée par cette étape.

La matrice de réflexion possède alors 3 dimensions : la base d'ondes planes en émission kᵢₙ = (k_{x,in}, k_{y,in}), la base d'ondes planes en réception kₒᵤₜ = (k_{x,out}, k_{y,out}) et la ou les fréquences considérées f.

A l'étape suivante E6, deux matrices virtuelles sont construites par sommation et différence des vecteurs d'ondes kₒᵤₜ et kᵢₙ de la sonde :
K1 (k_{x,in}+k_{x,out} ; k_{y,in}+k_{y,out} ; k_{x,in} ; k_{y,in} ; f), et
K2 (k_{x,out}-k_{x,in} ; k_{y,out}-k_{y,in} ; k_{x,in} ; k_{y,in} ; f).

D'un point de vue physique, ces deux matrices contiennent l'information sur la direction locale du fibrage.

A l'étape suivante E7, les matrices K1 et K2 sont moyennées selon les troisième, quatrième et cinquième dimensions k_{x,in}, k_{y,in}, et fréquence. Cette opération consiste à calculer une moyenne des éléments de la matrice, en faisant varier leurs indices des troisième, quatrième et cinquième dimensions, les indices des autres dimensions restant constants.

Il est à noter que pour la dimension fréquentielle, le calcul de moyenne n'est effectué que si une bande passante est considérée. Dans ce cas, l'information est moyennée sur la bande passante. Si une seule fréquence est considérée, il n'y a pas de calcul de moyenne selon la dimension fréquentielle.

Cette étape a pour résultat deux matrices à deux dimensions : K1ₘ(k_{x,in}+k_{x,out} ; k_{y,in}+k_{y,out}) et K2ₘ(k_{x,out}-k_{x,in} ; k_{y,out}-k_{y,in}).

Le signal rétrodiffusé par la pièce P est exprimé dans les plans d'ondes planes « kₒᵤₜ+kᵢₙ » et « kₒᵤₜ-kᵢₙ » construits à partir des vecteurs d'ondes kᵢₙ et kₒᵤₜ de la sonde. Ces plans d'ondes planes « kₒᵤₜ+kᵢₙ » et « kₒᵤₜ-kᵢₙ » sont porteurs d'une information exploitable pour déterminer la direction du fibrage.

A l'étape suivante E8, Les matrices K1ₘ et K2ₘ sont analysées pour déduire les directions de fibrage en 3D.

L'étape E8 est la détermination de l'orientation du fibrage en chaque point considéré en fonction de la direction associée aux maxima d'intensité du signal contenu dans les matrices K1ₘ et K2ₘ.

Les points de maximum d'intensité sont les points de plus grandes valeurs dans les matrices K1ₘ et K2ₘ. Lorsque la pièce possède un fibrage anisotrope, les points de maximum d'intensité suivent des directions privilégiées qui renseignent sur la direction du fibrage.

## Revendications

1. Dispositif de contrôle non destructif d'une pièce mécanique en un matériau polycristallin, comportant
- une sonde ultrasonore (1) comportant un réseau bidimensionnel de transducteurs capables d'émettre et de recevoir des signaux selon différents angles d'excitation, et
- un module de traitement (2) adapté pour contrôler les transducteurs en émission et en réception, traiter les signaux reçus par les transducteurs de manière à exprimer les signaux reçus par les transducteurs dans deux plans d'ondes planes construits à partir de vecteurs d'ondes d'émission et de réception de la sonde, et en déduire une information représentative de l'orientation tridimensionnelle du fibrage de la pièce mécanique.

2. Dispositif de contrôle non destructif d'une pièce mécanique en un matériau polycristallin selon la revendication 1, dans lequel le module de traitement (2) est adapté pour construire une matrice de réflexion (K) à trois dimensions.

3. Dispositif de contrôle non destructif d'une pièce mécanique en un matériau polycristallin selon la revendication 1 ou 2, dans lequel le module de traitement (2) est adapté pour exprimer les signaux reçus par les transducteurs dans une base d'ondes planes.

4. Dispositif de contrôle non destructif d'une pièce mécanique en un matériau polycristallin selon l'une quelconque des revendications 1 à 3, dans lequel le module de traitement (2) est adapté pour construire les deux plans d'ondes planes par sommation et différence des vecteurs d'ondes associés respectivement aux ondes planes émises et reçues par la sonde.

5. Dispositif de contrôle non destructif d'une pièce mécanique en un matériau polycristallin selon l'une quelconque des revendications 1 à 4, dans lequel le module de traitement (2) est adapté pour déduire l'information représentative de l'orientation tridimensionnelle du fibrage de la pièce mécanique en déterminant une direction associée à des maxima d'intensité des signaux reçus exprimés dans les deux plans d'ondes planes construits à partir des vecteurs d'ondes d'émission et de réception de la sonde.

6. Procédé de contrôle non destructif d'une pièce mécanique en un matériau polycristallin, mis en œuvre dans le dispositif selon l'une quelconque des revendications 1 à 5, **caractérisé en ce qu'**il comporte des étapes de contrôle (E1, E2) des transducteurs en émission et en réception, de traitement des signaux reçus par les transducteurs, d'expression (E7) des signaux reçus par les transducteurs dans deux plans d'ondes planes construits à partir de vecteurs d'ondes d'émission et de réception de la sonde, et de déduction (E8) d'une information représentative de l'orientation tridimensionnelle du fibrage de la pièce mécanique.

7. Programme d'ordinateur comportant des instructions pour l'exécution des étapes du procédé selon la revendication 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé selon la revendication 6.

## Patentansprüche

1. Zerstörungsfreie Prüfvorrichtung für ein mechanisches Teil aus einem polykristallinen Material, umfassend
- eine Ultraschallsonde (1) umfassend ein zweidimensionales Netz von Wandlern, die in der Lage sind, Signale in verschiedenen Anregungswinkeln zu senden und zu empfangen, und
- ein Verarbeitungsmodul (2), das geeignet ist, die Sende- und Empfangswandler zu kontrollieren, die von den Wandlern empfangenen Signale so zu verarbeiten, dass die von den Wandlern empfangenen Signale in zwei flachen Wellenebenen ausgedrückt werden, die aus Sende- und Empfangswellenvektoren der Sonde aufgebaut sind, und daraus eine repräsentative Information über die dreidimensionale Ausrichtung der Faserung des mechanischen Teils abzuleiten.

2. Zerstörungsfreie Prüfvorrichtung für ein mechanisches Teil aus einem polykristallinen Material nach Anspruch 1, wobei das Verarbeitungsmodul (2) zum Aufbau einer dreidimensionalen Reflexionsmatrix (K) geeignet ist.

3. Zerstörungsfreie Prüfvorrichtung für ein mechanisches Teil aus einem polykristallinen Material nach Anspruch 1 oder 2, wobei das Verarbeitungsmodul (2) dazu geeignet ist, die von den Wandlern empfangenen Signale in eine Flachwellenbasis auszudrücken.

4. Zerstörungsfreie Prüfvorrichtung für ein mechanisches Teil aus einem polykristallinen Material nach einem der Ansprüche 1 bis 3, wobei das Behandlungsmodul (2) dazu geeignet ist, die beiden flachen Wellenebenen durch Addition und Differenz der Wellenvektoren zu bilden, die jeweils mit den von der Sonde gesendeten und empfangenen flachen Wellen verbunden sind.

5. Zerstörungsfreie Prüfvorrichtung für ein mechanisches Teil aus einem polykristallinen Material nach einem der Ansprüche 1 bis 4, wobei das Behandlungsmodul (2) dazu geeignet ist, die repräsentative Information der dreidimensionalen Ausrichtung der Faserung des mechanischen Teils abzuleiten, indem eine Richtung bestimmt wird, die mit Intensitätsmaxima der empfangenen Signale verbunden ist, die in den beiden flachen Wellenebenen ausgedrückt werden, die aus den Sende- und Empfangswellenvektoren der Sonde aufgebaut sind.

6. Verfahren zur zerstörungsfreien Prüfung eines mechanischen Teils aus einem polykristallinen Material, umgesetzt in der Vorrichtung nach einem der Ansprüche 1 bis 5, **dadurch gekennzeichnet, dass** es Schritte zur Prüfung (E1, E2) der Sende- und Empfangswandler, zur Verarbeitung der von den Wandlern empfangenen Signale, zum Ausdrücken (E7) der von den Wandlern empfangenen Signale in zwei flachen Wellenebenen umfasst, die aus Sende- und Empfangswellenvektoren der Sonde aufgebaut sind, und Ableitung (E8) einer repräsentativen Information über die dreidimensionale Ausrichtung der Faserung des mechanischen Teils.

7. Computerprogramm umfassend Anweisungen zur Durchführung der Verfahrensschritte nach Anspruch 6, wenn das Programm von einem Computer ausgeführt wird.

8. Computerlesbares Speichermedium, auf dem ein Computerprogramm gespeichert ist, das Anweisungen zur Durchführung der Verfahrensschritte nach Anspruch 6 enthält.

## Claims

1. Device for non-destructive testing of a mechanical part made of a polycrystalline material, including
- an ultrasonic probe (1) including a two-dimensional array of transducers capable of emitting and receiving signals at different excitation angles, and
- a processing module (2) adapted to test the transducers in emission and in reception, process the signals received by the transducers so as to express the signals received by the transducers in two planes of plane-waves constructed from emission and reception wave vectors of the probe, and to deduce therefrom information representative of the three-dimensional orientation of the fiber structure of the mechanical part.

2. Device for non-destructive testing of a mechanical part made of a polycrystalline material according to claim 1, wherein the processing module (2) is adapted to construct a three-dimensional reflection matrix (K).

3. Device for non-destructive testing of a mechanical part made of a polycrystalline material according to claim 1 or 2, wherein the processing module (2) is adapted to express the signals received by the transducers in a plane-wave base.

4. Device for non-destructive testing of a mechanical part made of a polycrystalline material according to any one of claims 1 to 3, wherein the processing module (2) is adapted to construct the two planes of plane-waves by summation and difference of the wave vectors associated respectively with the plane-waves emitted and received by the probe.

5. Device for non-destructive testing of a mechanical part made of a polycrystalline material according to any one of claims 1 to 4, wherein the processing module (2) is adapted to deduce the information representative of the three-dimensional orientation of the fiber structure of the mechanical part by determining a direction associated with intensity maxima of the received signals expressed in the two planes of plane-waves constructed from the emission and reception wave vectors of the probe.

6. Method for non-destructively testing a mechanical part made of a polycrystalline material, implemented in the device according to any one of claims 1 to 5, **characterized in that** it includes steps (E1, E2) of controlling the transducers in emission and in reception, of processing the signals received by the transducers, of expressing (E7) the signals received by the transducers in two planes of plane-waves constructed from emission and reception wave vectors of the probe, and of deducing (E8) information representative of the three-dimensional orientation of the fiber structure of the mechanical part.

7. Computer program including instructions for the execution of the steps of the method according to claim 6 when said program is executed by a computer.

8. Computer-readable recording medium on which is recorded a computer program comprising instructions for the execution of the steps of the method according to claim 6.
